# EUROPÄISCHE PATENTSCHRIFT

(11) **EP 0 615 589 B1**
(45) Veröffentlichungstag und Bekanntmachung des Hinweises auf die Patenterteilung: **22.11.1995**
(21) Anmeldenummer: 93920854.2
(22) Anmeldetag: 01.10.1993
(51) Int. Cl.: F16H 61/46

(54) **STEUERVORRICHTUNG EINES HYDROSTATISCHEN GETRIEBES MIT BREMSVENTIL**
CONTROL DEVICE OF A HYDROSTATIC TRANSMISSION WITH BRAKE VALVE
DISPOSITIF DE COMMANDE D'UNE TRANSMISSION HYDROSTATIQUE AVEC SOUPAPE DE FREIN

(30) Priorität: 09.10.1992 DE 4234139
(43) Veröffentlichungstag der Anmeldung: 21.09.1994
(73) Patentinhaber: BRUENINGHAUS HYDROMATIK GMBH, 89275 Elchingen (DE)
(72) Erfinder: STICKEL, Oskar, D-89129 Langenau (DE); STURM, Hermann, D-89012 Ulm (DE)
(74) Vertreter: Körber, Wolfhart, Dr. rer.nat.
(86) Internationale Anmeldenummer: EP9302687
(87) Internationale Veröffentlichungsnummer: WO9409294

(56) Entgegenhaltungen:
- US-A- 4 481 769
- PATENT ABSTRACTS OF JAPAN vol. 9, no. 282 (M-428)9. November 1985 & JP,A,60 125 455 (HITACHI) 4. Juli 1985
- PATENT ABSTRACTS OF JAPAN vol. 013, no. 065 (M-797)14. Februar 1989 & JP,A,63 266 201 (KOMATSU) 2. November 1988

## Beschreibung

### Steuervorrichtung eines hydrostatischen Getriebes mit Bremsventil

Die Erfindung betrifft ein hydrostatisches Getriebe mit einem Bremsventil nach dem Oberbegriff des Patentanspruches 1.

Aus der US-PS 4 481 769 ist eine derartige Steuervorrichtung eines hydrostatisches Getriebe für den Antrieb eines Fahrzeugs bekannt. Im Lastbetrieb des Fahrzeuges fördert die von der Antriebsquelle angetriebene Hydropumpe je nach Fahrtrichtung über die eine oder die andere, jeweils als Vorlaufleitung dienende Arbeitsleitung zum Hydromotor, um diesen und damit die Fahrzeugräder anzutreiben. Das Bremsventil wird durch den beim Lastbetrieb in der jeweiligen Vorlaufleitung herrschenden Arbeitsdruck angesteuert und dadurch in einer Stellung gehalten, in der es den ungedrosselten Druckmittelrücklauf über die jeweils andere, als Rücklaufleitung dienende Arbeitsleitung ermöglicht. Der Arbeitsdruck in der jeweiligen Vorlaufleitung dient außerdem als Steuersignal zur Ansteuerung des Regelventils in Richtung einer Regelstellung, in der es die Stellbeaufschlagung der Stelleinrichtung in Richtung des maximalen Verdrängungsvolumens des Hydromotors regelt.

Beim Wechsel vom Last- zum Schubbetrieb, wenn also der Antrieb des Hydromotors nicht durch die Hydropumpe erfolgt, sondern von den Fahrzeugrädern, etwa bei Bergabfahrt, übernommen wird, fällt der Arbeitsdruck in der jeweiligen Vorlaufleitung ab und steht dadurch für die Ansteuerung des Bremsventils nicht mehr zur Verfügung. Das auf diese Weise hydraulisch druckentlastete Bremsventil nimmt daraufhin seine Bremsstellung ein, in der es durch Verschließen der Rücklaufleitung den Druckmittelrücklauf sperrt und einen entsprechenden Staudruck erzeugt, der den Hydromotor und damit das Fahrzeug abbremst. Dieser Staudruck dient gleichzeitig als Steuersignal, der das Regelventil in gleicher Weise wie im Lastbetrieb in Richtung Regelstellung ansteuert, so daß der Hydromotor durch entsprechende Verstellung der Stelleinrichtung auf maximales Verdrängungsvolumen ausgeschwenkt wird und somit einen entsprechend hohen, seinem maximalen Bremsmoment entsprechenden Staudruck erzeugt. Da keine Möglichkeit einer gezielten Beeinflussung besteht, baut sich dieser hohe Staudruck sehr schnell auf und bewirkt dadurch ein abruptes Einsetzen des Bremsvorganges mit entsprechender Beeinträchtigung des Fahrkomforts und der Fahrsicherheit.

Dieses Problem tritt bei solchen, aus der Praxis bekannten hydrostatischen Getrieben, deren Stelldruckleitung an die Arbeitsleitungsabschnitte zwischen dem Bremsventil und der Hydropumpe angeschlossen sind, deshalb nicht auf, weil der Druckmittelrücklauf vom Bremsventil zur Hydropumpe im Schubbetrieb nahezu drucklos erfolgt und dementsprechend kein Steuersignal zum Ansteuern des Regelventils zur Verfügung steht. Daher wird der Hydromotor durch die Rückstellkräfte seines Triebwerks auf minimales Verdrängungsvolumen eingestellt und erzeugt ein entsprechend geringes Bremsmoment mit dem Vorteil des vergleichsweise sanften Einsetzens des Bremsvorganges, aber auch dem Nachteil eines entsprechend längeren Bremsweges.

Es ist Aufgabe der Erfindung, die Steuervorrichtung der eingangs genannten Art so weiterzubilden, daß bei Aufrechterhaltung des maximalen Bremsmoments das Bremsverhalten des hydrostatischen Getriebes gezielt gesteuert werden kann.

Diese Aufgabe wird durch die kennzeichnenden Merkmale des Patentanspruches 1 gelöst.

Die Ansteuerung des Regelventils derart, daß mit zunehmender Drehzahl des Hydromotors dessen Verdrängungsvolumen abnimmt, erlaubt es, das Regelventil zu übersteuern, um dadurch den Hydromotor in Richtung maximalen Verdrängungsvolumens auszuschwenken und auf diese Weise im Schubbetrieb das erwünschte maximale Bremsmoment zu erzeugen. Das Übersteuerungsventil tritt bei Auftreten eines vorbestimmten Wertes der den Schubbetrieb kennzeichnenden Druckdifferenz in einer der Arbeitsleitungen vor und hinter dem Bremsventil mit höherem Druck in dem an den Hydromotor angeschlossenen Arbeitsleitungsabschnitt in Funktion und übersteuert das Regelventil, wobei der ihm innewohnende Durchgangswiderstand die Stelldruckbeaufschlagung und damit das Ausschwenken des Hydromotors auf größeres Verdrängungsvolumen entsprechend gezielt verzögert und somit den Bremsvorgang sanft einleitet. Die proportionale Abhängigkeit des Steuersignals von der Drehzahl des Hydromotors ermöglicht im Lastbetrieb die erforderliche, beispielsweise automotive Steuerung sowie die automatische Anpassung des hydrostatischen Getriebes an wechselnde Belastungen, da bei beispielsweise steigendem Fahrwiderstand die Fahrzeuggeschwindigkeit sinkt und der Hydromotor unter Abgabe eines höheren Drehmomentes in Richtung maximalen Verdrängungsvolumens ausgeschwenkt wird.

Das Steuersignal kann der Drehzahl des Hydromotors indirekt oder vorzugsweise direkt proportional sein; im ersteren Fall erfolgt die Übersteuerung des Regelventils durch Verstärkung und im letzteren Fall durch Abschwächung des Steuersignals.

Gemäß einer Weiterbildung der Erfindung ist ein Verzögerungselement vorgesehen, das als vorzugsweise einstellbare Drossel auf der Ablaufseite des Übersteuerungsventils angeordnet sein kann und im Schubbetrieb die Stelldruckbeaufschlagung in Richtung des maximalen Verdrängungsvolumens des Hydromotors weiter verzögert. Auf diese Weise wird das sanfte Einsetzen des Bremsvorgangs unabhängig von der zufälligen Verdrängungsvolumeneinstellung des Hydromotors gewährleistet, da die Zeitspanne für das Ausschwenken des Hydromotors bis auf z.B. maximales Verdrängungsvolumen, die bei einem bei Beginn des Bremsvorgangs auf größeres als das minimale Verdrängungsvolumen eingestellten Hydromotor gegenüber dessen Einstellung auf minimales Verdrängungsvolumen reduziert ist, durch die Wirkung des Verzögerungselementes verlängert wird.

Obwohl auch andere Übersteuerungsmaßnahmen denkbar sind, wie etwa durch Ansteuerung des Regelventils mit einem dem Steuersignal entgegenwirkenden, zweiten Steuersignal oder durch direkte Beaufschlagung der Stelleinrichtung mit dem Stelldruck in Richtung des maximalen Verdrängungsvolumens des Hydromotors, ist die gezielte Abschwächung des Steuersignals die bevorzugte Maßnahme. In diesem Zusammenhang ist es günstig, als Steuersignal einen hydraulischen Steuerdruck zu verwenden und das Übersteuerungsventil als ein mit seinem Eingang an die Steuersignalleitung und mit seinem Ausgang über eine Ablaufleitung an den Tank angeschlossenes Druckventil auszubilden, das bei Auftreten der Druckdifferenz die Steuersignalleitung mit der Ablaufleitung verbindet. Hierbei kann das Übersteuerungsventil zwei Steueranschlüsse aufweisen, deren einer über eine erste Steuerleitung an die Stelldruckleitung und deren anderer über eine zweite Steuerleitung an die an die Hydropumpe angeschlossenen Arbeitsleitungsabschnitte angeschlossen ist, wobei der Druck in der ersten Steuerleitung das Übersteuerungsventil in Richtung Offenstellung beaufschlagt, in welcher die Steuersignalleitungmit der Ablaufleitung verbunden ist.

Günstig ist hierbei die Verwendung einer vorzugsweise einstellbaren Druckfeder, die das Übersteuerungsventil entgegen dem Druck in der ersten Steuerleitung in Richtung Schließstellung beaufschlagt und die Druckdifferenz bestimmt, bei der das Übersteuerungsventil öffnet.

Das Übersteuerungsventil kann ein schaltendes Ventil mit einer Schließ- und einer Offenstellung oder ein stetig verstellbares, also drosselndes Ventil sein, welches das Steuersignal in Abhängigkeit von der Druckdifferenz auf unterschiedliche Werte, beispielsweise auf 50 %, absenkt und entsprechend seiner jeweiligen Drosselwirkung den Hydromotor verzögert ausschwenkt. Hierbei kann das Ausschwenken bis auf maximales Verdrängungsvolumen oder bei Verwendung einer Wegmeßfeder, die den Verstellweg der Stelleinrichtung im Sinne einer Folgesteuerung auf das Regelventil überträgt, bis auf das sich bei Kraftgleichgewicht am Regelventil einstellende Verdrängungsvolumen erfolgen.

Gemäß einer Weiterbildung der Erfindung ist ein Steuersignalgenerator zur Erzeugung des Steuersignals in der Steuersignalleitung vorgesehen und zwecks Absenkung des Steuersignals manuell ansteuerbar, beispielsweise mit Hilfe des sog. Inchpedals, um auf diese Weise den Bremsvorgang jederzeit und gezielt einleiten zu können. Die Erfindung sieht ferner zur Drehzahlbegrenzung des Hydromotors ein weiteres, zweites Übersteuerungsventil vor, das an die Steuersignalleitung angeschlossen ist und bei Erreichen eines der maximal zulässigen Drehzahl des Hydromotors entsprechenden Steuerdrucks eine Offenstellung einnimmt, in der die Steuersignalleitung an den Tank angeschlossen ist. Die Absenkung dieses Steuerdrucks kann hierbei gedrosselt oder auch ungedrosselt erfolgen.

Vorzugsweise ist das zweite Übersteuerungsventil manuell in Richtung Offenstellung ansteuerbar, um den Bremsvorgang jederzeit einleiten zu können. Diese Maßnahme kann anstelle oder zusätzlich zu der manuellen Ansteuerung des Steuersignalgenerators zwecks Absenkung des Steuersignals durchgeführt werden.

Nachstehend ist die Erfindung anhand eines bevorzugten Ausführungsbeispiels unter Bezugnahme auf die Zeichnung näher beschrieben. Es zeigen:
- Fig. 1: ein Schaltschema eines hydrostatischen Getriebes mit einer Steuervorrichtung gemäß dem bevorzugten Ausführungsbeispiel der Erfindung mit einem Steuersignalgenerator in dem mit A bezeichneten Bereich, und
- Fig. 2: eine alternative Ausbildung zum Steuersignalgenerator nach Fig. 1.

Die Zeichnung zeigt ein als Fahrantrieb für ein Fahrzeug vorgesehenes hydrostatisches Getriebe, das mit offenem Kreislauf ausgebildet ist, jedoch auch einen geschlossenen Kreislauf aufweisen kann. Es umfaßt eine verstellbare Hydropumpe 1 mit einer Förderrichtung, einen verstellbaren Hydromotor 2, eine mit demselben mechanisch gekoppelte Hilfspumpe 3 mit zwei Förderrichtungen, ein Fahrtrichtungsventil 4 zur Umsteuerung der Drehrichtung des Hydromotors 2 und damit der Fahrtrichtung des Fahrzeuges, eine hydraulische Bremseinrichtung bestehend aus einem Bremsventil 5 und zwei zugeordneten Druckbegrenzungsventilen 6,7, eine mit einem Stelldruck beaufschlagbare Stelleinrichtung 8 zur Verstellung des Verdrängungsvolumens des Hydromotors 2, ein Regelventil 9 zur Regelung der Stelldruckbeaufschlagung der Stelleinrichtung 8 in Abhängigkeit von einem der Drehzahl des Hydromotors 2 proportionalen Steuersignal, einen an die Hilfspumpe 3 angeschlossenen Steuersignalgenerator 10 zur Erzeugung des Steuersignals sowie ein erstes und ein zweites Übersteuerungsventil 11 bzw. 12 zur Übersteuerung des Regelventils 9.

Die Hydropumpe 1 ist über eine Saugleitung 13 an den Tank 14 angeschlossen und von einer nicht dargestellten Antriebsquelle, z.B. einem Dieselmotor, antreibbar. Der Hydromotor 2 ist über eine erste Arbeitsleitung 15 an die Hydropumpe 1 und über eine zweite Arbeitsleitung 16 sowie über eine Leckölleitung 17 an den Tank 14 angeschlossen. Er ist außer mit der Hilfspumpe 3 mit einem nicht gezeigten Schaltgetriebe zwecks Antrieb der ebenfalls nicht gezeigten Fahrzeugräder gekoppelt.

Das Fahrtrichtungsventil 4 und das Bremsventil 5 sind in beiden Arbeitsleitungen 15,16, das erstere Ventil näher zur Hydropumpe 1 und das letztere Ventil näher zum Hydromotor 2, angeordnet. Die Leitungsabschnitte der ersten Arbeitsleitung 15 zwischen der Hydropumpe 1 und dem Fahrtrichtungsventil 4, zwischen dem Fahrtrichtungsventil 4 und dem Bremsventil 5 sowie zwischen dem Bremsventil 5 und dem Hydromotor 2 sind mit den Bezugszeichen 15,18; 15,19 und 15,20 und die entsprechenden Leitungsabschnitte der zweiten Arbeitsleitung 16 mit den Bezugszeichen 16,21; 16,22 und 16,23 bezeichnet.

Das Fahrtrichtungsventil 4 ist ein willkürlich betätigbares 6/3-Wegeventil mit den Schaltstellungen: Vorwärtsfahrt, Leerlauf und Rückwärtsfahrt. Es weist dementsprechend je einen Anschluß an die Arbeitsleitungsabschnitte 15,18; 15,19; 16,21 und 16,22 sowie zwei weitere Anschlüsse auf, deren einer pumpenseitig über ein Leitungsstück 24 an den Arbeitsleitungsabschnitt 15,18 und motorseitig über ein Leitungsstück 25 an den Arbeitsleitungsabschnitt 16,21 angeschlossen ist.

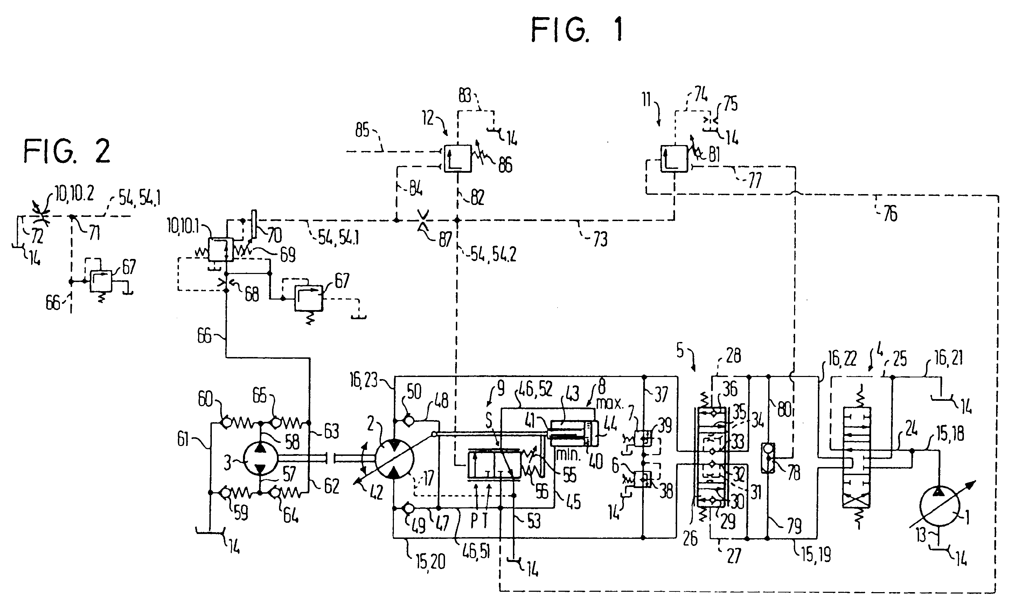

In der in Fig. 1 gezeigten Leerlaufstellung des Fahrtrichtungsventils 4 sind die beiden Anschlüsse an die Leitungsstücke 24 und 25 sowie die beiden motorseitigen Anschlüsse an die Arbeitsleitungsabschnitte 15,19 und 16,22 jeweils miteinander verbunden, während die verbleibenden zwei Anschlüsse gesperrt sind. In dieser Leerlaufstellung fördert die Hydropumpe 1 in den Tank 14, während der Hydromotor 2 auf Umlauf geschaltet ist.

In der in Fig. 1 oberen Schaltstellung, d.h. bei nach unten verschobenem Kolben des Fahrtrichtungsventils 4, ist die Verbindung zwischen den beiden Anschlüssen an die Arbeitsleitungsabschnitte 15,18 und 15,19 sowie zwischen den Anschlüssen an die Arbeitsleitungsabschnitte 16,21 und 16,22 hergestellt, während die beiden verbleibenden Anschlüsse gesperrt sind. Diese obere Schaltstellung des Fahrtrichtungsventils 4 entspricht der Vorwärtsfahrt des Fahrzeugs; der Druckmittelvorlauf von der Hydropumpe 1 zum Hydromotor 2 erfolgt über die erste Arbeitsleitung 15 und der Druckmittelrücklauf zum Tank 14 über die zweite Arbeitsleitung 16.

In der in Fig. 1 unteren Schaltstellung des Fahrtrichtungsventils 4 sind die Verbindungen der in der oberen Schaltstellung offenen Anschlüsse miteinander vertauscht, so daß das Fahrzeug auf Rückwärtsfahrt eingestellt ist. Dementsprechend erfolgt der Druckmittelvorlauf über die Arbeitsleitungsabschnitte 15,18; 16,22 und 16,23 und der Rücklauf über die Arbeitsleitungsabschnitte 15,20; 15,19 und 16,21.

Das Bremsventil 5 ist ein stetig verstellbares 4/3/Wegeventil, dessen Steuerkolben 26 durch Federzentrierung in der in Fig. 1 gezeigten Mittel- oder Bremsstellung gehalten und durch hydraulische Beaufschlagung in Richtung einer in Fig. 1 unteren und oberen Endstellung verstellbar ist. Die hydraulische Beaufschlagung erfolgt an beiden Stirnseiten des Steuerkolbens 26 über je eine an die Arbeitsleitungsabschnitte 15,19 bzw. 16,22 angeschlossene Leitung 27 bzw. 28. Das Bremsventil 5 umfaßt je einen Anschluß an die Arbeitsleitungsabschnitte 15,19; 15,20; 16,22 und 16,23 sowie acht Durchflußkanäle 29 bis 36. Die Durchflußkanäle 31 und 34 weisen je einen gegenüber den Arbeitsleitungen 15,16 sowie den verbleibenden Durchflußkanälen verringerten, drosselnden Querschnitt auf. In den Durchflußkanälen 29,32,33 und 36 ist je ein in Richtung Hydropumpe 1 sperrendes Rückschlagventil angeordnet, während die verbleibenden Durchflußkanäle in beiden Richtungen durchströmbar sind. In der Bremsstellung des Bremsventils 5 stehen die beiden Anschlüsse an die Arbeitsleitungsabschnitte 15,19 und 15,20 über die Durchflußkanäle 31 und 32 in Verbindung, während die beiden Anschlüsse an die Arbeitsleitungsabschnitte 16,22 und 16,23 über die Durchflußkanäle 33 und 34 miteinander verbunden sind. Die gleichen Anschlüsse stehen in der unteren Endstellung des Bremsventils 5 über die Durchflußkanäle 29 bzw. 30 und in der oberen Endstellung über die Durchflußkanäle 35 bzw. 36 in Verbindung.

Die einstellbaren Druckbegrenzungsventile 6,7 sind in einer die Arbeitsleitungsabschnitte 15,20 und 16,23 verbindenden Leitung 37 angeordnet. Zwei in entgegengesetzten Richtungen sperrende Rückschlagventile 38 bzw. 39 sind in je einem die Druckbegrenzungsventile 6,7 umgehenden Bypaß angeordnet.

Die Stelleinrichtung 8 besteht aus einem doppeltwirkenden Stellzylinder mit einem Differentialkolben 40, der über eine Kolbenstange 41 mit einem Stellglied 42 zur Verstellung des Verdrängungsvolumens des Hydromotors 2 gekoppelt ist und mit seiner kleineren, ringförmigen Stirnfläche einen von der Kolbenstange 41 durchsetzten ersten Druckraum 43 sowie mit seiner gegenüberliegenden, größeren, kreisförmigen Stirnfläche einen zweiten Druckraum 44 definiert. Der erste Druckraum 43 ist über eine Stelldruckzweigleitung 45 an eine Stelldruckleitung 46 angeschlossen, die über zwei Stelldruckanschlußleitungen 47,48 an die Arbeitsleitungsabschnitte 15,20 und 16,23 angeschlossen ist. In den Stelldruckanschlußleitungen 47,48 ist je ein in Richtung der Arbeitsleitungsabschnitte 15,20 und 16,23 sperrendes Rückschlagventil 49,50 angeordnet.

Das Regelventil 9 ist ein stetig verstellbares 3/2-Wegeventil mit zwei Arbeitsanschlüssen P und S an die zu den Stelldruckanschlußleitungen 47,48 bzw. zum zweiten Druckraum 44 führenden Leitungsabschnitte 51 bzw. 52 der Stelldruckleitung 46, mit einem Arbeitsanschluß T an ein in die Leckölleitung 17 einmündendes und auf diese Weise zum Tank 14 führendes Leitungsstück 53 und mit einem Steueranschluß, der an eine Steuersignalleitung 54 angeschlossen ist. Das Regelventil 9 ist durch die Kraft einer einstellbaren Feder 55 in der in Fig. 1 gezeigten (linken) Ausgangsstellung gehalten und durch ein Steuersignal in Form eines hydraulischen Steuerdrucks in der Steuersignalleitung 54 gegen die Kraft der Feder 55 in Richtung (rechte) Endstellung ansteuerbar. In der Ausgangsstellung des Regelventils 9 ist der Anschluß P an den Stelldruckleitungsabschnitt 46,51 gesperrt, während die beiden verbleibenden Anschlüsse S und T miteinander verbunden sind. Im Regelbereich, d.h. in sämtlichen Regelstellungen einschließlich der Endstellung ist der Tankanschluß T gesperrt, während die verbleibenden Anschlüsse P und S in Verbindung stehen. Das Regelventil 9 ist ferner durch eine mit der Kolbenstange 41 der Stelleinrichtung 8 gekoppelte Wegmeßfeder 56 in Richtung Ausgangsstellung beaufschlagt.

Die Hilfspumpe 3 ist über zwei Leitungen 57,58 mit je einem Rückschlagventil 59,60 an eine zum Tank 14 führende Ansaugleitung 61 und über zwei weitere Leitungen 62,63 mit je einem Rückschlagventil 64,65 an eine zum Steuersignalgeber 10 führende Hilfsdruckleitung 66 angeschlossen. Die Rückschlagventile 59,60 sperren in Richtung zum Tank 14 und die Rückschlagventile 64,65 in Richtung Hilfspumpe 3. Ein herkömmliches Druckbegrenzungsventil 67 ist an die Hilfsdruckleitung 66 angeschlossen.

Im Ausführungsbeispiel nach Figur 1 ist der Steuersignalgeber 10 als ein mit seinem ständig offenen Eingang an die Hilfsdruckleitung 66 und mit seinem Ausgang an die Steuersignalleitung 54 angeschlossenes Differenzdruckregelventil 10.1 mit ständigem, gedrosselten Ablauf 87 zum Tank 14 ausgebildet. Dieser Ablauf ermöglicht eine ständige Strömung des von der Hilfspumpe 3 geförderten Volumenstroms und damit den Aufbau einer drehzahlproportionalen Druckdifferenz an einer in der Hilfsdruckleitung 66 angeordneten Blende 68; das Druckbegrenzungsventil 67 ist im Bereich zwischen der Blende 68 und dem Differenzdruckregelventil 10.1 an die Hilfsdruckleitung 66 angeschlossen. Das Differenzdruckregelventil 10.1, auch als Druckwaage bezeichnet, ist von herkömmlicher Ausführung und deshalb nicht näher beschrieben. Seine Funktion besteht darin, die Druckdifferenz an der Blende 68 zum Steuerdruck in der Steuersignalleitung 54 umzuwandeln. Zu diesem Zweck ist es mit den Drücken vor und nach der Blende 68 in einander entgegengesetzten Richtungen, mit dem letzteren Druck gemeinsam mit dem Druck einer Einstellfeder 69 in Richtung Schließstellung, angesteuert. Sobald die hydraulische Kraft der Druckdifferenz die Kraft der Einstellfeder 69 übersteigt, nimmt das Differenzdruckregelventil 10.1 eine Regelstellung ein, in der sein Ausgang mit einem der Druckdifferenz an der Blende 68 proportionalen Öffnungsquerschnitt geöffnet ist, durch den Druckmittel abströmt, wobei sich in der Steuersignalleitung 54 ein drehzahlproportionaler Steuerdruck aufbaut. Ein manuell betätigbares, sog. Inchpedal 70 dient zur Erhöhung der Kraft der Einstellfeder 69 des Differenzdruckregelventils 10.1.

Im Ausführungsbeispiel nach Figur 2 mündet die Hilfsdruckleitung 66 an der Einmündung 71 direkt in die Steuersignalleitung 54 und der als Verstelldrossel 10.2 ausgebildete Steuersignalgeber 10 ist in einer von dieser Einmündung 71 zum Tank 14 führenden Ablaufleitung 72 angeordnet. Der Druck vor der Verstelldrossel 10.2 ist der der Drehzahl der Hilfspumpe 3 und damit des Hydromotors 2 proportionale Steuerdruck in der Steuersignalleitung 54. Die Verstelldrossel 10.2 ist mittels des Inchpedals 69 ebenfalls verstellbar.

Das erste Übersteuerungsventil 11 ist als schaltendes Druckventil ausgebildet, das mit seinem Eingang an eine zur Steuersignalleitung 54 führende Signalverbindungsleitung 73 und mit seinem Ausgang über eine Ablaufleitung 74 mit einer Drossel 75 an den Tank 14 angeschlossen ist. Das Druckventil 11 weist zwei einander gegenüberliegende Steueranschlüsse auf, deren einer über eine erste Steuerleitung 76 an die Stelldruckleitung 46,51 und deren anderer über eine zweite Steuerleitung 77 an ein Wechselventil 78 angeschlossen ist, das durch zwei Anschlußleitungen 79,80 mit den Arbeitsleitungsabschnitten 15,19; 16,22 verbunden ist. Eine einstellbare Druckfeder 81 beaufschlagt gemeinsam mit dem Druck in der zweiten Steuerleitung 77 das Druckventil 11 in Richtung Schließstellung, während der Druck in der ersten Steuerleitung 76 das Druckventil 11 in Richtung Offenstellung beaufschlagt, in der die Steuersignalleitung 54 über die Signalverbindungsleitung 73 an die Ablaufleitung 74 angeschlossen ist. Die Drossel 75 weist im vorliegenden Ausführungsbeispiel einen konstanten Drosselquerschnitt auf, kann jedoch auch als eine einstellbare Drossel ausgebildet sein. Statt des schaltenden Druckventils kann gemäß einer anderen, nicht gezeigten Ausführung ein stetig verstellbares, also drosselndes Druckventil verwendet werden.

Das zweite Übersteuerungsventil 12 ist als herkömmliches Druckbegrenzungsventil ausgebildet, das mit seinem Eingang an eine zur Steuersignalleitung 54 führende Leitungsverbindung 82 und dessen Ausgang über eine Entlastungsleitung 83 an den Tank 14 angeschlossen ist. Das Druckbegrenzungsventil 12 weist zwei Steueranschlüsse auf, deren einer über eine erste Steuerdruckleitung 84 an die Steuersignalleitung 54 und deren anderer über eine zweite Steuerdruckleitung 85 an die nicht gezeigte Betriebsbremse angeschlossen ist. Eine einstellbare Feder 86 beaufschlagt das Druckbegrenzungsventil 12 in Richtung Schließstellung, während die Drücke in der ersten und zweiten Steuerdruckleitung 84,85 das Druckbegrenzungsventil 11 in Richtung Offenstellung beaufschlagen, in der die Steuersignalleitung 54 über die Leitungsverbindung 82 an die Entlastungsleitung 83 angeschlossen ist. Eine Drossel 87 ist zwischen Anschlüssen der beiden Steuerdruckleitungen 84 und 85 in der Steuersignalleitung 54 angeordnet und teilt letztere in einen steuersignalgeberseitigen Abschnitt 54.1 und einen regelventilseitigen Abschnitt 54.2.

Die Funktion des hydrostatischen Getriebes mit der erfindungsgemäßen Steuervorrichtung ist wie folgt:
Bei stehendem Fahrzeug befinden sich das Fahrtrichtungsventil 4 und das Bremsventil 5 in ihrer jeweiligen Mittelstellung, so daß die angetriebene Hydropumpe 1 über die Leitungsstücke 24,25 in den Tank 14 fördert und der Hydromotor 2 sowie die Hilfspumpe 3 dementsprechend nicht angetrieben werden und somit mangels Druckmittelströmung in der Hilfsdruckleitung 66 kein Steuerdruck in der Steuersignalleitung 54 erzeugt wird; das Regelventil 9 befindet sich somit unter der Wirkung der Feder 55 in seiner Ausgangsstellung, in der der zweite Druckraum 44 der Stelleinrichtung 8 zum Tank 14 hin entlastet ist. Der Differentialkolben 40 nimmt unter dem Druck der Wegmeßfeder 56 die in Figur 1 gezeigte rechte Endstellung ein, die dem maximalen Verdrängungsvolumen des Hydromotors 2 entspricht. Die Arbeitsleitungsabschnitte 15,19; 15,20; 16,22 und 16,23 sind drucklos, so daß sich das erste Übersteuerungsventil 11 in seiner Schließstellung befindet. Gleiches gilt auch für das zweite Übersteuerungsventil 12.

Nach Umschalten des Fahrtrichtungsventils 4 in die obere Schaltstellung fördert die Hydropumpe 1 in die als Vorlaufleitung dienende erste Arbeitsleitung 15. Der sich dabei im Arbeitsleitungsabschnitt 15,19 aufbauende Arbeitsdruck wirkt über die Leitung 27 auf den Steuerkolben 26 des Bremsventils 5 und verschiebt diesen in die untere Endstellung, so daß das von der Hydropumpe 1 geförderte Druckmittel über den Durchflußkanal 29 im Bremsventil 5 zum Hydromotor 2 strömt und diesen antreibt. Auf diese Weise beginnt das Fahrzeug vorwärtzufahren. Der Druckmittelrücklauf zum Tank 14 erfolgt ungedrosselt über den Arbeitsleitungsabschnitt 16,23, den Durchflußkanal 30 im Bremsventil 5 und die Arbeitsleitungsabschnitte 16,22 und 16,21.

Der in der Arbeitsleitung 15 herrschende Arbeitsdruck beaufschlagt über die Stelldruckanschlußleitung 47, den Stelldruckleitungsabschnitt 46,51 und die Stelldruckzweigleitung 45 den ersten Druckraum 43 der Stelleinrichtung 8 und hält den Differentialkolben 40 in seiner rechten Endstellung und damit den Hydromotor 2 auf maximale Verdrängungsvolumen-Einstellung.

Der Steuersignalgeber 10 wandelt den Volumenstrom, der von der gemeinsam mit dem Hydromotor 2 angetriebenen Hilfspumpe 3 erzeugt wird, bei Erreichen einer vorbestimmten Drehzahl in einen drehzahlproportionalen Steuerdruck um, der über die Steuersignalleitung 54 auf das Regelventil 9 wirkt und dieses in Richtung Endstellung verschiebt, sobald die hydraulische Kraft des Steuerdrucks die Kraft der Feder 55 übersteigt, d.h., sobald der Regelpunkt erreicht ist. Das Regelventil 9 nimmt eine der Größe des Steuerdrucks entsprechende Regelstellung ein und stellt die Verbindung zwischen den Stelldruckleitungsabschnitten 46,51 und 46,52 her, so daß das Druckmittel in der Arbeitsleitung 15 als Stelldruckmittel in den zweiten Druckraum 44 der Stelleinrichtung 8 einströmt und bei ausreichendem Druck den Differentialkolben 40 unter zunehmender Belastung der Wegmeßfeder 56 in Richtung seiner linken Endstellung verschiebt, die dem minimalen Verdrängungsvolumen des Hydromotors 2 entspricht.

Sobald die Federkräfte der Feder 55 und der Wegmeßfeder 56 größer als die hydraulische Kraft des Steuerdrucks sind, wird das Regelventil 9 und damit der Differentialkolben 40 in Richtung Ausgangsstellung bzw. rechte Endstellung verschoben und dementsprechend der Hydromotor 2 in Richtung maximales Verdrängungsvolumen ausgeschwenkt, um dann, wenn am Regelventil 9 wiederum Kraftungleichgewicht zugunsten des Steuerdrucks herrscht, durch entsprechende Verschiebung des Differentialkolbens 40 erneut in Richtung minimales Verdrängungsvolumen zurückgeschwenkt zu werden. Die Wegmeßfeder 56 wird wiederum gespannt und der vorbeschriebene Regelvorgang wiederholt sich, wobei der Hydromotor 2 auf einer von seiner Drehzahl abhängigen Verdrängungsvolumen-Einstellung gehalten wird. Mit zunehmender Drehzahl des Hydromotors wird durch entsprechendes Verstellen des Regelventils 9 und des Differentialkolbens 40 der Hydromotor 2 vollständig auf minimales Verdrängungsvolumen zurückgeschwenkt, so daß das Fahrzeug seine maximale Fahrgeschwindigkeit erreicht.

Der Arbeitsdruck in den Arbeitsleitungsabschnitten 15,19 und 15,20 wirkt über das Wechselventil 78 und die zweite Steuerleitung 77 sowie über die Stelldruckleitung 46,51 und die erste Steuerleitung 76 in einander entgegengesetzten Richtungen auf das erste Übersteuerungsventil 11, das sich somit unter dem Druck der Druckfeder 81 in seiner Schließstellung befindet.

Sobald der Steuerdruck in der Steuersignalleitung 54 einen der maximal zulässigen Drehzahl des Hydromotors 2 entsprechenden Wert erreicht, öffnet das zweite Übersteuerungsventil 12, wodurch der Steuerdruck zum Tank 14 hin entlastet wird. Das Regelventil 9 nimmt seine Ausgangsstellung ein, so daß der Druckmittelstrom im Stelldruckleitungsabschnitt 46,51 über die Stelldruckzweigleitung 45 in den ersten Druckraum 43 der Stelleinrichtung 8 einströmt und den Differentialkolben 40 in seine rechte Endstellung verschiebt, die dem maximalen Verdrängungsvolumen des Hydromotors 2 entspricht.

Unterhalb der maximal zulässigen Drehzahl kann der Bremsvorgang jederzeit durch Betätigung des Bremspedals oder des Inchpedals 70 eingeleitet werden. Im ersteren Fall öffnet das zweite Übersteuerungsventil 12 in der vorbeschriebenen Weise und im letzteren Fall wird der Steuersignalgeber 10.1 geschlossen bzw. die Verstelldrossel 10.2 geöffnet.

Die soeben beschriebenen Vorgänge laufen ebenfalls bei Rückwärtsfahrt des Fahrzeugs lediglich mit dem Unterschied ab, daß das Fahrtrichtungsventil 4 die untere Schaltstellung und das Bremsventil 5 die obere Endstellung einnehmen und der Arbeitsdruck in der nun als Vorlaufleitung dienenden zweiten Arbeitsleitung 16 herrscht, während der Druckmittelrücklauf über die erste Arbeitsleitung 15 erfolgt.

Bei Überschreitung des jeweils an den Druckbegrenzungsventilen 6,7 eingestellten Wertes wird der Druck im jeweils höher belasteten Arbeitsleitungsabschnitt 15,20; 16,23 über das Druckbegrenzungsventil 6 bzw. 7 zum Tank 14 hin entlastet.

Sobald das Fahrzeug vom vorstehend beschriebenen Lastbetrieb in den Schubbetrieb wechselt, wenn also der Antrieb des Hydromotors 2 nicht durch die Hydropumpe 1 erfolgt, sondern von den Fahrzeugrädern übernommen wird, etwa bei Bergabfahrt oder bei Leerlauf des Dieselmotors, fällt der Arbeitsdruck in der jeweils als Vorlaufleitung dienenden Arbeitsleitung 15 (bei Vorwärtsfahrt) bzw. 16 (bei Rückwärtsfahrt) und damit auch in der Leitung 27 bzw. 28 ab. Das auf diese Weise hydraulisch druckentlastete Bremsventil 5 nimmt unter der Wirkung seiner Federzentrierung die Bremsstellung ein. In dieser Stellung fördert der von den Fahrzeugrädern angetriebene, als Pumpe wirkende Hydromotor 2 das über die jeweilige Vorlaufleitung 15 (bei Vorwärtsfahrt) bzw. 16 (bei Rückwärtsfahrt) einschließlich des Durchflußkanals 32 bzw. 33 angesaugte Druckmittel über die jeweils als Rücklaufleitung dienende Arbeitsleitung 16 (bei Vorwärtsfahrt) bzw. 15 (bei Rückwärtsfahrt) einschließlich des jeweiligen Durchflußkanals 34 bzw. 31 im Bremsventil 5 zum Tank 14. Dabei baut sich im jeweiligen Arbeitsleitungsabschnitt 16,23 bzw. 15,20 ein der Drosselwirkung des jeweiligen Durchflußkanals 34 bzw. 31 entsprechender Staudruck auf, der den Hydromotor 2 abbremst. Das Druckmittel strömt nach dem drosselnden Durchflußkanal 34 bzw. 31 nahezu drucklos über den Arbeitsleitungsabschnitt 16,22 bzw. 15,19 zum Tank 14 hin ab. Es entsteht somit eine Druckdifferenz in den Arbeitsleitungsabschnitten zwischen dem Hydromotor 2 und dem Bremsventil 5 einerseits und dem Bremsventil 5 und der Hydropumpe 1 andererseits. Diese Druckdifferenz beaufschlagt über die erste und die zweite Steuerleitung 76,77 das erste Übersteuerungsventil 11 entgegen dem Druck der Druckfeder 81. Sobald die hydraulische Kraft der Druckdifferenz die Einstellkraft dieser Druckfeder 81 übersteigt, öffnet das erste Übersteuerungsventil 11 und verbindet die Signalverbindungsleitung 73 über die Ablaufleitung 74 mit dem Tank 14. Das Druckmittel in der Steuersignalleitung 54 strömt über die Drossel 75 in der Ablaufleitung 74 gedrosselt unter entsprechend verzögertem Abbau des Steuerdrucks und damit entsprechend langsamer Rückstellung des Regelventils 9 unter dem Druck der Feder 55 und der Wegmeßfeder 56 in seine Ausgangsstellung zum Tank 14 hin ab. Das Druckmittel im zweiten Druckraum 44 der Stelleinrichtung 8 strömt entsprechend der Rückstellgeschwindigkeit des Regelventils 9 verzögert über das Leitungsstück 53 zum Tank 14 hin ab, so daß der Differentialkolben 40 durch das über die Stelldruckzweigleitung 45 in den ersten Druckraum 43 einströmende Druckmittel entsprechend langsam in seine rechte Endstellung verschoben wird, die dem maximalen Verdrängungsvolumen des Hydromotors 2 entspricht. Auf diese Weise übersteuert das erste Übersteuerungsventil 11 bei Einsetzen des Schubbetriebs das Regelventil 9 und steuert die Stelldruckbeaufschlagung der Stelleinrichtung 8 so, daß der Hydromotor langsam auf maximales Verdrängungsvolumen ausgeschwenkt wird und der Bremsvorgang entsprechend sanft einsetzt und mit maximalem Bremsmoment abläuft.

Das gemäß der vorstehenden Beschreibung als Schaltventil mit einer Offen- und einer Schließstellung ausgebildete erste Übersteuerungsventil 11 kann gemäß einer alternativen Ausführung ein stetig verstellbares, also drosselndes Ventil sein, dessen Durchflußquerschnitt in Abhängigkeit von der Druckdifferenz in der ersten und zweiten Steuerleitung 76,77 kontinuierlich verändert und damit der Steuerdruck in der Steuersignalleitung 54 auf entsprechend unterschiedliche Werte und dadurch der Hydromotor 2 auf Zwischenstellungen zwischen dem minimalen und dem maximalen Verdrängungsvolumen eingestellt werden kann. Dabei herrscht aufgrund der Drossel 87 auch bei geöffnetem ersten Übersteuerungsventil 11 der das zweite Übersteuerungsventil 12 ansteuernde, der Drehzahl des Hydromotors 2 proportionale Steuerdruck für einen bestimmten Zeitraum im Steuersignalleitungsabschnitt 54.1. Auf diese Weise kann auch bei nur teilweise geöffnetem ersten Übersteuerungsventil 11 die automatische Drehzahlbegrenzung durch das zweite Übersteuerungsventil 12 bei Bedarf jederzeit in Kraft treten.

## Patentansprüche

1. Steuervorrichtung eines hydrostatischen Getriebes, das wenigstens eine Hydropumpe (1), wenigstens einen verstellbaren Hydromotor (2) und ein Bremsventil (5) umfaßt, das in zwei an den Hydromotor angeschlossenen Arbeitsleitungen (15, 16), von denen wenigstens eine zur Hydropumpe führt, angeordnet ist und das bei Schubbetrieb des hydrostatischen Getriebes jeweils eine der Arbeitsleitungen zumindest teilweise schließt,
- mit einer Stelleinrichtung (8) zur Verstellung des Verdrängungsvolumens des Hydromotors, die mit dessen Stellglied (42) verbunden ist und durch einen Stelldruck in einer an die Arbeitsleitungen zwischen Hydromotor und Bremsventil angeschlossenen Stelldruckleitung (46) beaufschlagbar ist, und
- mit einem Regelventil (9) zur Regelung der Stelldruckbeaufschlagung der Stelleinrichtung in Abhängigkeit von einem in der Steuervorrichtung gebildeten Steuersignal in einer zu einem Steueranschluß des Regelventils führenden Steuersignalleitung (54),
**dadurch gekennzeichnet,**
- daß das Steuersignal proportional zur Drehzahl des Hydromotors (2) ist und mit dessen zunehmender Drehzahl die Stelldruckbeaufschlagung der Stelleinrichtung (8) über das Regelventil (9) in Richtung des minimalen Verdrängungsvolumens des Hydromotors (2) steuert, und
- daß ein Übersteuerungsventil (11) vorgesehen ist, das im Schubbetrieb bei Auftreten einer vorbestimmten Druckdifferenz in einer der Arbeitsleitungen (15,19; 16,22; 15,20; 16,23) vor und hinter dem Bremsventil (5) mit einem höheren Druck in dem an den Hydromotor (2) angeschlossenen Arbeitsleitungsabschnitt (15,20; 16,23) das Regelventil (9) durch gezielte Steuerung der Stelldruckbeaufschlagung in Richtung des maximalen Verdrängungsvolumens des Hydromotors (2) übersteuert.

2. Steuervorrichtung nach Anspruch 1,
**gekennzeichnet** durch ein dem Übersteuerungsventil (11) zugeordnetes Verzögerungselement (75) zum Verzögern der Stelldruckbeaufschlagung in Richtung des maximalen Verdrängungsvolumens des Hydromotors (2).

3. Steuervorrichtung nach Anspruch 1 oder 2,
**dadurch gekennzeichnet**,
daß das Steuersignal der Drehzahl des Hydromotors (2) direkt proportional ist und die Übersteuerung durch Abschwächung des Steuersignals erfolgt.

4. Steuervorrichtung nach wenigstens einem vorhergehenden Anspruch,
**dadurch gekennzeichnet,**
daß das Steuersignal ein hydraulischer Steuerdruck und das Übersteuerungsventil (11) als ein mit seinem Eingang an die Steuersignalleitung (54) und mit seinem Ausgang über eine Ablaufleitung (74) an den Tank (14) angeschlossenes Druckventil ausgebildet ist, das bei Auftreten der vorbestimmten Druckdifferenz die Steuersignalleitung (54) mit der Ablaufleitung (74) verbindet.

5. Steuervorrichtung nach Anspruch 4,
**dadurch gekennzeichnet,**
daß das Übersteuerungsventil (11) zwei Steueranschlüsse aufweist, deren einer über eine erste Steuerleitung (76) an die Stelldruckleitung (46, 51) und deren anderer über eine zweite Steuerleitung (77) an die an die Hydropumpe (1) angeschlossenen Arbeitsleitungsabschnitte (15,19; 16,22) angeschlossen ist, und daß der Druck in der ersten Steuerleitung (76) das Übersteuerungsventil (11) in Richtung Offenstellung beaufschlagt, in welcher die Steuersignalleitung (54) mit der Ablaufleitung (74) verbunden ist.

6. Steuervorrichtung nach Anspruch 5,
**gekennzeichnet** durch eine Druckfeder (81), die das Übersteuerungsventil (11) entgegen dem Druck in der ersten Steuerleitung (76) in Richtung Schließstellung beaufschlagt.

7. Steuervorrichtung nach Anspruch 6,
**dadurch gekennzeichnet**,
daß die Federkraft der Druckfeder (81) einstellbar ist.

8. Steuervorrichtung nach wenigstens einem vorhergehenden Anspruch,
**dadurch gekennzeichnet,**
daß das Übersteuerungsventil (11) ein schaltendes Ventil mit einer Schließ- und einer Offenstellung ist.

9. Steuervorrichtung nach wenigstens einem der Ansprüche 1 bis 7,
**dadurch gekennzeichnet,**
daß das Übersteuerungsventil ein stetig verstellbares Ventil ist.

10. Steuervorrichtung nach wenigstens einem der Ansprüche 4 bis 9,
**dadurch gekennzeichnet,**
daß das Verzögerungselement (75) eine auf der Ablaufseite des Übersteuerungsventils (11) angeordnete Drossel (75) für den verzögerten Abbau des Steuerdrucks in der Steuersignalleitung (54) ist.

11. Steuervorrichtung nach Anspruch 10,
**dadurch gekennzeichnet**,
daß die Drossel (75) einstellbar ist.

12. Steuervorrichtung nach wenigstens einem vorhergehenden Anspruch, gekennzeichnet durch ein weiteres, zweites Übersteuerungsventil (12), das bei Erreichen eines der maximal zulässigen Drehzahl des Hydromotors (2) entsprechenden Steuersignals in der Steuersignalleitung (54) das Regelventil (9) durch gezielte Steuerung der Stelldruckbeaufschlagung in Richtung des maximalen Verdrängungsvolumens des Hydromotors (2) übersteuert.

13. Steuervorrichtung nach Anspruch 12,
**dadurch gekennzeichnet**,
daß das zweite Übersteuerungsventil (12) als ein an die Steuersignalleitung (54) angeschlossenes Druckbegrenzungsventil ausgebildet ist, das bei Erreichen des der maximal zulässigen Drehzahl des Hydromotors (2) entsprechenden Steuerdrucks eine Offenstellung einnimmt, in der die Steuersignalleitung (54) an den Tank (14) angeschlossen ist.

14. Steuervorrichtung nach Anspruch 13,
**dadurch gekennzeichnet,**
daß das zweite Übersteuerungsventil (12) manuell in Richtung Offenstellung ansteuerbar ist.

15. Steuervorrichtung nach wenigstens einem vorhergehenden Anspruch, **gekennzeichnet** durch einen Steuersignalgenerator (10), der zur Erzeugung des Steuersignals in der Steuersignalleitung (54) vorgesehen und zwecks Abschwächung des Steuersignals manuell ansteuerbar ist.

## Claims

1. Control device of a hydrostatic transmission that comprises at least one hydraulic pump (1), at least one adjustable hydraulic motor (2) and a brake valve (5) which is arranged in two operating lines (15, 16) connected to the hydraulic motor, of which lines at least one leads to the hydraulic pump, and which, upon overrun operation of the hydrostatic transmission, in each case at least partially closes one of the operating lines,
- having a setting device (8) for adjusting the displacement volume of the hydraulic motor, which setting device is connected with the setting member (42) of the motor and can be acted upon by means of a setting pressure in a setting pressure line (46) connected to the operating lines between hydraulic motor and brake valve, and
- having a control valve (9) for regulating the setting pressure action on the setting device in dependence upon a control signal, formed in the control device, in a control signal line (54) leading to a control connection of the control valve,
characterized in that,
- the control signal is proportional to the speed of rotation of the hydraulic motor (2) and with increasing speed of rotation thereof controls the setting pressure action on the setting device (8) by way of the control valve (9) in the direction of the minimum displacement volume of the hydraulic motor (2), and
in that
- an override valve (11) is provided which in overrun operation, upon appearance of predetermined pressure difference in one of the operating lines (15, 19; 16, 22; 15, 20; 16, 23) before and after the brake valve (5) with a higher pressure in the operating line section (15, 20; 16, 23) connected to the hydraulic motor (2) overrides the control valve (9), by means of purposive control of the setting pressure action in the direction of maximum displacement volume of the hydraulic motor (2).

2. Control device according to claim 1,
characterized by a delay element (75) associated with the override valve (11) for delaying the setting pressure action in the direction of maximum displacement volume of the hydraulic motor (2).

3. Control device according to claim 1 or 2,
characterized in that,
the control signal is directly proportional to the speed of rotation of the hydraulic motor (2) and the override is effected by reduction of the control signal.

4. Control device according to any preceding claim,
characterized in that,
the control signal is a hydraulic control pressure and the override valve (11) is formed as a pressure valve having its inlet connected to the control signal line (54) and having its outlet connected to the tank (14) via a discharge line (74), which valve, upon appearance of the predetermined pressure difference, connects the control signal line (54) with the discharge line (74).

5. Control device according to claim 4,
characterized in that,
the override valve (11) has two control connections of which one is connected via a first control line (76) to the setting pressure line (46, 51) and of which the other is connected to the operating line sections (15, 19; 16, 22) connected to the hydraulic pump (1), via a second control line (77), and in that the pressure in the first control line (76) acts on the override valve (11) in the direction towards the open position, in which the control signal line (54) is connected with the discharge line (74).

6. Control device according to claim 5,
characterized by a pressure spring (81) which acts upon the override valve (11) against the pressure in the first control line (76) in the direction towards the closed position.

7. Control device according to claim 6,
characterized in that,
the spring force of the pressure spring (81) is adjustable.

8. Control device according to any preceding claim,
characterized in that,
the override valve (11) is a switching valve having a closed and an open position.

9. Control device according to any of claims 1 to 7,
characterized in that,
the override valve is a continuously adjustable valve.

10. Control device according to any of claims 4 to 9,
characterized in that,
the delay element (75) is a throttle (75) arranged on the discharge side of the override valve (11), for the delayed relief of the control pressure in the control signal line (54).

11. Control device according to claim 10,
characterized in that,
the throttle (75) is adjustable.

12. Control device according to any preceding claim,
characterized by a further, second override valve (12) which upon attainment of a control signal in the control signal line (54) corresponding to the maximum permissable speed of rotation of the hydraulic motor (2) overrides the control valve (9) by purposive control of the setting pressure action in the direction of the maximum displacement volume of the hydraulic motor (2).

13. Control device according to claim 12,
characterized in that,
the second override valve (12) is formed as a pressure limiting valve connected to the control signal line (54), which pressure limiting valve, upon attainment of the control pressure corresponding to the maximum permissable speed of rotation of the hydraulic motor (2), adopts an open position in which the control signal line (54) is connected to the tank (14).

14. Control device according to claim 13,
characterized in that,
the second override valve (12) can be manually controlled in the direction towards the open position.

15. Control device according to any preceding claim,
characterized by a control signal generator (10) which is provided for generating the control signal in the control signal line (54) and for the purpose of reducing the control signal is manually controllable.

## Revendications

1. Dispositif de commande d'une transmission hydrostatique, qui comporte au moins une pompe hydraulique (1), au moins un moteur hydraulique (2) réglable et une soupape de frein (5), qui est placée dans deux conduites de travail (15, 16) raccordées au moteur hydraulique, dont une au moins mène à la pompe hydraulique, et qui, en fonctionnement en poussée de la transmission hydrostatique, fermé au moins en partie chaque fois l'une des conduites de travail,
- comportant un dispositif de réglage (8) pour le réglage du volume de déplacement du moteur hydraulique, qui est relié à son organe de réglage (42) et qui peut recevoir une pression de réglage dans une conduite de pression de réglage (46) raccordée aux conduites de travail entre le moteur hydraulique et la soupape de frein, et
- comportant une soupape de régulation (9) pour la régulation de l'alimentation en pression de réglage du dispositif de réglage, en fonction d'un signal de commande formé dans le dispositif de commande, dans une conduite de signal de commande (54) menant à un raccord de commande de la soupape de régulation,
caractérisé
- en ce que le signal de commande est proportionnel à la vitesse de rotation du moteur hydraulique (2) et commande, avec sa vitesse de rotation croissante, l'alimentation en pression de réglage du dispositif de réglage (8), par la soupape de régulation (9), en direction du volume de déplacement minimal du moteur hydraulique (2), et
- en ce qu'il est prévu une soupape de sur-régulation (11), qui, en poussée, à l'apparition d'une différence de pression prédéterminée dans l'une des conduites de travail (15, 19 ; 16, 22 ; 15, 20 ; 16, 23), devant et derrière la soupape de frein (5), sur-régule avec une pression supérieure, dans la portion de conduite de travail (15, 20 ; 16, 23), raccordée au moteur hydraulique (2), la soupape de régulation (9), par commande contrôlée de l'alimentation en pression de réglage, dans le sens du volume de déplacement maximal du moteur hydraulique (2).

2. Dispositif de commande selon la revendication 1,
caractérisé par un élément de temporisation (75), associé à la soupape de sur-régulation (11), destiné à retarder l'alimentation en pression de réglage dans le sens du volume de déplacement maximal du moteur hydraulique (2).

3. Dispositif de commande selon les revendications 1 ou 2,
caractérisé en ce que le signal de commande est directement proportionnel à la vitesse de rotation du moteur hydraulique (2) et la sur-régulation s'effectue par affaiblissement du signal de commande.

4. Dispositif de commande selon l'une au moins des revendications précédentes,
caractérisé
en ce que le signal de commande est une pression de commande hydraulique et la soupape de sur-régulation (11) est conçue en tant que soupape de pression raccordée par son entrée à la conduite de signal de commande (54) et, par sa sortie, par une conduite d'évacuation (74), au réservoir (14), soupape de pression qui à l'apparition de la différence de pression prédéterminée, relie la conduite de signal de commande (54) à la conduite d'évacuation (74).

5. Dispositif de commande selon la revendication 4,
caractérisé
en ce que la soupape de sur-régulation (11) présente deux raccords de commande, dont un est raccordé, par une première conduite de commande (76), à la conduite de pression de réglage (46, 51) et dont l'autre est raccordée, par une deuxième conduite de commande (77), aux portions de conduite de travail (15, 19 ; 16, 22) raccordées à la pompe hydraulique, et en ce que la pression dans la première conduite de commande (76) agit sur la soupape de sur-régulation (11) en direction de la position d'ouverture, dans laquelle la conduite de signal de commande (54) est reliée à la conduite d'évacuation (74).

6. Dispositif de commande selon la revendication 5,
caractérisé par un ressort (81), qui agit sur la soupape de sur-régulation (11), à l'encontre de la pression dans la première conduite de commande (76), dans le sens de la position de fermeture.

7. Dispositif de commande selon la revendication 6,
caractérisé en ce que la force du ressort de pression (81) est réglable.

8. Dispositif de commande selon l'une au moins des revendications précédentes,
caractérisé
en ce que la soupape de sur-régulation (11) est une soupape de commutation avec une position de fermeture et une position d'ouverture.

9. Dispositif de commande selon l'une au moins des revendications 1 à 7,
caractérisé
en ce que la soupape de sur-régulation est une soupape réglable en permanence.

10. Dispositif de commande selon l'une au moins des revendications 4 à 9,
caractérisé
en ce que l'élément de temporisation (75) est un organe d'étranglement (75), placé sur le côté évacuation de la soupape de sur-régulation (11), pour la diminution temporisée de la pression de commande dans la conduite de signal de commande (54).

11. Dispositif de commande selon la revendication 10,
caractérisé
en ce que l'organe d'étranglement (75) est réglable.

12. Dispositif de commande selon l'une au moins des revendications précédentes,
caractérisé par une autre deuxième soupape de sur-régulation (12), qui, lorsqu'est atteint un signal de commande correspondant à la vitesse de rotation maximale admissible du moteur hydraulique (2) dans la conduite de signal de commande (54), sur-régule la soupape de régulation (9), par commande contrôlée de l'alimentation en pression de réglage, dans le sens du volume de déplacement maximal du moteur hydraulique (2).

13. Dispositif de commande selon la revendication 12,
caractérisé
en ce que la deuxième soupape de sur-régulation (12) est une soupape de limitation de pression, raccordée à la conduite de signal de commande (54), qui, lorsqu'est atteinte la pression de commande correspondant à la vitesse de rotation maximale admissible du moteur hydraulique (2), prend un position ouverte, dans laquelle la conduite de signal de commande (54) est raccordée au réservoir (14).

14. Dispositif de commande selon la revendication 13,
caractérisé
en ce que la deuxième soupape de sur-régulation (12) est commandable manuellement dans le sens de la position ouverte.

15. Dispositif de commande selon l'une au moins des revendications précédentes,
caractérisé par un générateur de signal de commande (10), qui est prévu pour produire le signal de commande dans la conduite de signal de commande (54) et qui afin d'affaiblir le signal de commande, est commandable manuellement.
